# EUROPÄISCHE PATENTSCHRIFT

(11) **EP 1 055 676 B1**
(45) Veröffentlichungstag und Bekanntmachung des Hinweises auf die Patenterteilung: **06.08.2003**
(21) Anmeldenummer: 00109476.2
(22) Anmeldetag: 04.05.2000
(51) Int. Cl.: C07F 9/30, C07F 9/48

(54) **Verfahren zur Herstellung von Dialkylphosphinsäuren und deren Salzen**
Process for the preparation of dialkylphosphinic acids and their salts
Procédé pour la préparation d'acides dialkyl phosphiniques et de leurs sels

(30) Priorität: 25.05.1999 DE 19923619
(43) Veröffentlichungstag der Anmeldung: 29.11.2000
(73) Patentinhaber: Clariant GmbH, 65929 Frankfurt am Main (DE)
(72) Erfinder: Weferling, Norbert, Dr., 50354 Hürth (DE); Sicken, Martin, Dr., 51149 Köln (DE); Kolbe, Günter, 50169 Kerpen (DE); Schmitz, Hans-Peter, 50321 Brühl (DE)

(56) Entgegenhaltungen:
- EP-A- 0 011 245
- EP-A- 0 969 008
- WO-A-98/20012
- WO-A-99/28327
- WO-A-99/28328
- WO-A-99/28329
- FR-A- 1 558 606
- WILLIAM C DRINKARD: "Some salts of symmetric phosphinic acids" JOURNAL OF THE AMERICAN CHEMICAL SOCIETY, Bd. 74, Nr. 21, 1. November 1952 (1952-11-01), Seiten 5520-5521, XP002093391

## Beschreibung

Die Erfindung betrifft ein Verfahren zur Herstellung von Dialkylphosphinsäuren und deren Salzen sowie die Verwendung der nach diesem Verfahren hergestellten Dialkylphosphinsäuren und deren Salzen.

Phosphinsäuren und deren Salze sind nach verschiedenen Methoden herstellbar und in großem Umfang beschrieben (Houben-Weyl IV, Bd. XII/1, S. 220 bis 240).

Die Herstellung dieser Verbindungen ist technisch aufwendig und erfolgt beispielsweise durch Oxidation der entsprechenden Phosphine oder über die Ester der Alkylphosphonigen Säuren, die ihrerseits aus den entsprechenden Phosphonigsäuredihalogeniden durch Umsetzung mit Alkoholen hergestellt werden. Die dem Verfahren zugrundeliegenden Phosphine und Phosphonigsäure-dihalogenide, z.B. Methyldichlorphosphin, werden bisher in aufwendigen Synthesen hergestellt (Houben-Weyl, Band 12/1, S. 306). Es werden zudem verschiedene Nebenprodukte gebildet, die, wie zum Teil auch die vorgenannten Ausgangsprodukte, giftig, selbstentzündlich und/oder korrosiv, also höchst unerwünscht sind.

Die von den vorgenannten Edukten ausgehenden organischen Phosphinsäuren und ihren Salze, sowie Verfahren zu ihrer Herstellung und ihre Verwendung sind teilweise beschrieben.

So sind etwa die Aluminiumsalze von organischen Phosphorsäuren sind als Flammschutzmittel bekannt. Sie können nach verschiedenen Verfahren hergestellt werden.

Die EP-A-0 299 922 beschreibt ein Verfahren zur Herstellung von Aluminiumsalzen von Phosphor- und Phosphonsäureestern durch Umsetzung von Aluminiumverbindungen mit Phosphorsäure, Phosphonsäure oder eines Esters davon.

Bei dem in der EP-A-0 245 207 beschriebenen Verfahren werden Aluminiumverbindungen mit Alkylphosphonsäurediestern zum entsprechenden Aluminiumsalz umgesetzt.

Nach der EP-A-0 327 496 führt die Umsetzung von Aluminiumhydroxid mit Alkylphosphonsäurediestern in Abwesenheit von Wasser bei ca. 180 °C ebenfalls zu Aluminiumsalzen der Phosphonsäurehalbester.

Die EP-A-0 699 708 beschreibt flammgeschützte Polyesterformmassen, wobei die Polyester durch den Zusatz von Calcium- oder Aluminiumsalzen von Phosphin- oder Diphosphinsäuren flammfest ausgerüstet werden. Die vorgenannten Salze werden durch Umsetzung des entsprechenden Dialkylphosphinsäuren mit Calcium- oder Aluminiumhydroxid erhalten.

Die DE-A-24 47 727 beschreibt schwerentflammbare Polyamidformmassen, die ein (Metall)Salz einer Phosphinsäure oder einer Diphosphinsäure enthalten.

Die vorgenannten Verfahren weisen jedoch den Nachteil auf, daß die geeigneten organischen Phosphorverbindungen zunächst erst einmal auf umständliche Art und Weise hergestellt werden müssen. Dies trifft insbesondere für die Dialkylphosphinsäuren zu, deren Aluminiumsalze in der Anwendung als Flammschutzmittel in bestimmten Polymeren hervorragend geeignet sind.

Der Erfindung liegt daher die Aufgabe zugrunde, ein Verfahren zur Herstellung von Dialkylphosphinsäuren und deren Salzen zur Verfügung zu stellen, bei dem sich auf besonders einfache und wirtschaftliche Art und Weise sowohl die Dialkylphosphinsäuren selbst als auch die ebenfalls gewünschten Endprodukte, nämlich Dialkylphosphinsäuresalze von bestimmten Metallen, herstellen lassen.

Es besteht daher ein Bedarf an Verfahren zur Herstellung von Dialkylphosphinsäuren und deren Salzen, welches auf einfache Art und Weise durchführbar ist und bei dem einheitliche Produkte in hoher Ausbeute erhalten werden. Auch sollte ein solches Verfahren den bisher bekannten wirtschaftlich und umwelttechnisch deutlich überlegen sein.

Diese Aufgabe wird gelöst durch ein Verfahren der eingangs genannten Art, dadurch gekennzeichnet, daß man
a) elementaren gelben Phosphor mit Alkylierungsmitteln in Gegenwart einer Base zu einem Gemisch, welches als Hauptbestandteile die (Metall)salze der Alkylphosphonigen, Phosphorigen und Hypophosphorigen Säure enthält, umsetzt
b) die Hauptbestandteile des Gemisches aus a) zu einer Estermischung verestert
c) den Ester der Alkylphosphonigen Säure aus der Estermischung isoliert
d) durch radikal-initiierte Umsetzung mit Olefinen aus dem Ester der Alkylphosphonigen Säure den entsprechenden Ester der Dialkylphosphinsäure herstellt
e) den Ester der Dialkylphosphinsäure in die freie Säure oder in Dialkylphosphinsäuresalze von Metallen der Gruppen IA, IIA, IIIA, IVA, VA, IIB, IVB, VIIB, VIIIB des Periodensystems oder von Cer überführt.

Das erfindungsgemäße Verfahren weist gegenüber den bisher bekannten Verfahren erhebliche Vorteile auf, da es in der Produktverteilung eine positive Bilanz aufweist und zugleich die als negativ zu beurteilenden Edukte Phosphine und Phosphonigsäure-dihalogenide vermeidet und auch keine halogenierten organischen Nebenprodukte erzeugt.

Bevorzugt handelt es sich bei den Alkylierungsmitteln um Alkylhalogenide, Dialkylsulfate, Trialkylphosphate, Dialkylcarbonate und/oder um Ameisensäureorthoester.

Besonders bevorzugt werden als Alkylierungsmittel Methylchlorid, Methylbromid und/oder Dimethylsulfat eingesetzt.

Bevorzugt handelt es sich bei den Basen um Hydroxide, Carbonate, Bicarbonate, Amide, Alkoholate und/oder Aminbasen, wie etwa Amine und Ammoniak.

Bevorzugt wird die Reaktion im Schritt a) in einem Zwei-Phasen-System aus wäßrigem Alkali- oder Erdalkalihydroxid oder Gemischen davon und einem organischen Lösungsmittel durchgeführt.

Bevorzugt werden im Schritt a) als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, eingesetzt.

Besonders bevorzugt wird als organisches Lösungsmittel Toluol, allein oder in Kombination mit Alkoholen, eingesetzt.

Gegebenenfalls kann die Reaktion auch in einem nicht-wäßrigem System ausgeführt werden, etwa durch Einsatz von festem Natriumhydroxid oder Aminen.

Bevorzugt wird die Reaktion in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide öder Tetraorganylammoniumhalogenide.

Bevorzugt beträgt die Temperatur bei der Reaktion -20 bis + 80 °C.

Besonders bevorzugt beträgt die Temperatur -10 bis +30 °C.

Bevorzugt wird die Reaktion unter einem Druck von 0 bis 10 bar durchgeführt.

Bevorzugt wird das erfindungsgemäße Verfahren im Schritt a) so ausgeführt, daß man den gelben Phosphor in einem Lösungsmittel oder einem Lösungsmittelgemisch suspendiert oder löst und dann mit Alkylhalogenid und einer Verbindung der Formel MOH oder M'(OH)₂ oder Gemischen davon, in denen M ein Alkalimetall und M' ein Erdalkalimetall bedeutet, umsetzt.

Bevorzugt werden der gelbe Phosphor und das Alkylhalogenid im molaren Verhältnis von 1:1 bis 1:3 miteinander umgesetzt, wobei das molare Verhältnis von gelbem Phosphor zur Verbindung der Formel MOH oder M'(OH)₂ 1:1 bis 1:5 beträgt.

Bevorzugt werden die Hauptbestandteile des Gemisches aus a) im Schritt b) mit einem linearen oder verzweigten Alkohol der algemeinen Formel R-OH, wobei R für einen linearen oder verzweigten Alkylrest mit 1 bis 10 Kohlenstoffatomen steht, verestert.

In einer anderen bevorzugten Ausführungsform des erfindungsgemäßen Verfahrens werden die Hauptbestandteile des Gemisches aus a) mit Mineralsäuren eine Mischung der Alkylphosphonigen, Phosphorigen und Hypophosphorigen Säuren überführt, wobei man gleichzeitig die (Metall)salze der Mineralsäuren ausfällt und anschließend die Mischung dieser Säuren verestert.

Bevorzugt wird das bei der Veresterung gebildete Wasser durch Azeotropdestillation entfernt.

Mit anderen Worten kann die Veresterung der Phosphonigen Säure zum entsprechenden Monoester durch Umsetzung mit höhersiedenden Alkoholen unter Entfernung des gebildeten Wassers durch Azeotropdestillation erreicht werden.

Bevorzugt wird hierbei die Fällung der Metallsalze, üblicherweise der Alkali- bzw. Erdalkali-Mineralsalze mittels Austausch des Lösungsmittels Wasser durch den in Reaktionsschritt b) zu verwendenden Alkohol durchgeführt.

Bevorzugt wird vor der Veresterung das bereits ausgefällte Alkali- oder Erdalkali-Mineralsalz abfiltriert.

Bevorzugt handelt es sich bei dem Alkohol um n-, i-Butanol, n-Hexanol, Ethylhexanol und/oder Amylalkohol.

Bevorzugt handelt es sich bei den Mineralsäuren um Salzsäure, Schwefelsäure und/oder Phosphorsäure.

Besonders bevorzugt handelt es sich bei den Mineralsäuren um Salzsäure.

Bevorzugt werden die während Schritt a) in geringen Mengen entstandenen Phosphine durch Oxidation entfernt.

Bevorzugt wird Wasserstoffperoxid als Oxidationsmittel verwendet.

Bevorzugt wird im Schritt c) der Ester der Alkylphosphonigen Säure destillativ entfernt. Bevorzugt handelt es sich bei dem Ester der Alkylphosphonigen Säure um Methylphosphonigsäure-n-butylester, Methylphosphonigsäure-iso-butylester Methylphosphonigsäure-n-hexylester, Methylphosphonigsäure-2-ethylhexylester und/oder Methylphosphonigsäure-amylester.

Bevorzugt werden als Radikalstarter Azo-Verbindungen oder peroxidische anorganische und/oder peroxidische organische Radikalstarter eingesetzt.

Bevorzugt handelt es sich bei den Azo-Verbindungen um kationische und/oder nicht-kationische Azo-Verbindungen.

Bevorzugt werden als kationische Azo-Verbindungen 2,2'-Azobis(2-amidinopropan)-dihydrochlorid oder 2,2'-Azobis(N,N'-dimethylenisobutyramidin)dihydrochlorid eingesetzt.

Bevorzugt werden als nicht-kationische Azo-Verbindungen Azobis(isobutyronitril), 4,4'Azobis(4-cyano-pentansäure), 2,2'Azobis(2-methylbutyronitril) eingesetzt.

Bevorzugt werden als peroxidische anorganische Radikalstarter Wasserstoffperoxid, Ammoniumperoxodisulfat und/oder Kaliumoperoxodisulfat eingesetzt.

Bevorzugt werden als peroxidische organische Radikalstarter Dibenzoylperoxid, Di-tert.butylperoxid und/oder Peressigsäure eingesetzt.

Eine breite Auswahl geeigneter Radikalstarter findet sich beispielsweise in Houben-Weyl, Ergänzungsband 20, im Kapitel "Polymerisation durch radikalische Initiierung" auf den Seiten 15-74.

Bevorzugt werden die Radikalstarter während der Reaktion kontinuierlich zudosiert.

Bevorzugt werden die Radikalstarter als Lösung im eingesetzten Olefin während der Reaktion kontinuierlich zudosiert.

Bevorzugt werden in Schritt d) als Olefine lineare oder verzweigte α-Olefine eingesetzt. Bevorzugt werden als Olefine solche mit innenständiger Doppelbindung, cyclische oder offenkettige Diene und/oder Polyene mit 2 bis 20 Kohlenstoffatomen eingesetzt.

Bevorzugt werden als Olefine Ethylen, n-, i-Propylen, n-, i-Buten, n-, i-Penten, n-, i-Hexen, n-, i-Octen, 1-Decen, 1,5-Cyclooctadien, 1,3-Cyclopentadien, Dicyclopentadien und/oder 2,4,4-Trimethylpenten-Isomerengemisch eingesetzt.

Bevorzugt tragen die Olefine eine funktionelle Gruppe.

Als Olefine sind Verbindungen der allgemeinen Formel 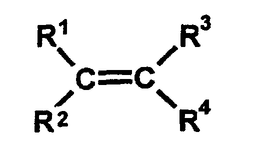 in der R¹-R⁴ gleich oder verschieden sein können und für Wasserstoff, eine Alkylgruppe mit 1 bis 18 C-Atomen, für Phenyl, Benzyl oder alkylsubtituierte Aromaten stehen, geeignet.

Geeignet sind ebenfalls Cycloolefine der Formel 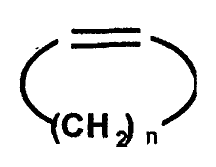 insbesondere Cyclopenten, Cyclohexen, Cycloocten und Cyclodecen.

Eingesetzt werden können auch offenkettige Diene der Formel 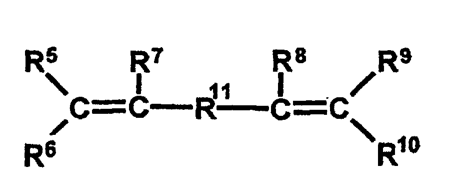 in der R⁵ - R¹⁰ gleich oder verschieden sind und für Wasserstoff oder eine C₁ bis C₆ - Alkylgruppe stehen und R¹¹ für (CH₂)ₙ mit n=0 bis 6 steht Bevorzugt sind hierbei Butadien, Isopren und 1,5-Hexadien.

Als Cyclodiene sind 1,3-Cyclopentadien, Dicyclopentadien und 1,5-Cyclooctadien sowie Norbornadien bevorzugt.

Bevorzugt erfolgt die Umsetzung mit den Olefinen bei einer Temperatur von 40 bis 250 °C.

Besonders bevorzugt erfolgt diese Umsetzung bei einer Temperatur von 70 bis 190 °C.

Bevorzugt erfolgt diese Umsetzung ohne Lösungsmittel

Alternativ ist auch die Umsetzung in Gegenwart eines Lösungsmittels möglich.

Bevorzugt erfolgt die Umsetzung in essigsaurem Medium.

Bevorzugt erfolgt die Umsetzung unter Druck.

Bevorzugt handelt es sich bei den Metallen um Li, Na, K, Mg, Ca, Sr, Ba, Al, Ge, Sn, Sb, Bi, Zn, Ti, Zr, Mn, Fe und/oder Ce.

Bevorzugt wird im Schritt e) der Ester der Dialkylphosphinsäure direkt mit Metallverbindungen zu Metallsalzen der Dialkylphosphinsäure umgesetzt.

Bevorzugt wird im Schritt e) der Ester der Dialkylphosphinsäure zur Dialkylphosphinsäure hydrolysiert.

Bevorzugt wird im Schritt e) der Ester der Dialkylphosphinsäure zur Dialkylphosphinsäure hydrolysiert und anschließend zu Metallsalzen der Dialkylphosphinsäure umgesetzt.

Bevorzugt wird im Schritt e) der Ester der Dialkylphosphinsäure mit Natronlauge zum Natriumsalz der Dialkylphosphinsäure hydrolysiert.

Bevorzugt wird im Schritt e) der Ester der Dialkylphosphinsäure mit Natronlauge zum Natriumsalz der Dialkylphosphinsäure hydrolysiert und anschließend zu Metallsalzen der Dialkylphosphinsäure umgesetzt.

Dabei erfolgt die Umsetzung im Schritt e) nach Einstellung eines für das jeweilige System Dialkylphosphinsäure/Metallverbindung optimalen pH-Bereichs für die Salzfällung.

Bevorzugt handelt sich bei den Metallverbindungen um Metalloxide, -hydroxide, -oxidhydroxide, -sulfate, -acetate, -chloride, -nitrate und/oder -alkoxide.

Besonders bevorzugt handelt es sich bei den Metallverbindungen um Aluminiumhydroxid oder um Aluminiumsulfate.

Der Gegenstand der vorliegenden Erfindung umfaßt insbesondere auch ein Verfahren, bei dem man gelben Phosphor mit Methylchlorid in Gegenwart von Natronlauge und dem Phasentransferkatalysator Tributylhexadecylphosphoniumbromid zum Natriumsalz der Methylphosphonigen Säure umsetzt, aus diesem durch Zusatz von Salzsäure die freie Säure freisetzt, diese mit 2-Ethylhexanol im Gemisch verestert, den Ester destillativ isoliert, anschließend unter radikalischer Initiierung mit Di-tert.butylperoxid mit Ethylen zum entsprechenden Ester der Methylethylphosphinsäure umsetzt und schließlich sukzessive mit Natronlauge hydrolysiert und mit Aluminiumsulfat das Aluminiumsalz der Methylethylphosphinsäure fällt.

Die Erfindung betrifft auch die Verwendung der nach dem erfindungsgemäßen Verfahren hergestellten Dialkylphosphinsäuren/-salze als Vorprodukte zur chemischen Synthese.

Die Erfindung betrifft auch die Verwendung der nach dem erfindungsgemäßen Verfahren hergestellten Dialkylphosphinsäuren/-salze zur Herstellung von anderen, phosphorhaltigen Verbindungen und Derivaten, insbesondere als Edukte für Pflanzenschutzmittel.

Die Erfindung betrifft auch die Verwendung der nach dem erfindungsgemäßen Verfahren hergestellten Dialkylphosphinsäuren/-salze als Flammschutzmittel und als Ausgangsprodukte zur Herstellung von Flammschutzmitteln.

Die Erfindung betrifft auch die Verwendung der nach dem erfindungsgemäßen Verfahren hergestellten Dialkylphosphinsäuren/-salze als Ausgangsprodukte zur Herstellung von Flammschutzmitteln für thermoplastische Polymere wie Polyethylenterephthalat, Polybutylenterephthalat oder Polyamid.

Die Erfindung betrifft auch die Verwendung der nach dem erfindungsgemäßen Verfahren hergestellten Dialkylphosphinsäuren/-salze als Ausgangsprodukte zur Herstellung von Flammschutzmittel für duroplastische Harze wie ungesättigte Polyesterharze, Epoxidharze, Polyurethane oder Acrylate.

Überraschenderweise wurde gefunden, daß sich elementarer gelber Phosphor nach dem Schritt
a) des erfindungsgemäßen Verfahrens mit Alkylierungsmitteln im Zweiphasensystem (organisches Lösungsmittel/Base) und ggf. in Anwesenheit eines (Phasen-Transfer-)Katalysators unter äußerst milden Bedingungen zum (Metall)salz der entsprechenden Alkylphosphonigen Säure RP(:O)HOH umsetzen läßt.

Daneben können geringe Mengen an Dialkylphosphinsäuren, Trialkylphosphanoxid R₃P(:O), Dialkylphosphanoxid und nicht identifizierte Phosphorverbindungen entstehen, die auf übliche Weise aus dem Produktgemisch entfernt werden. Als Nebenprodukt entsteht ferner Wasserstoff, der problemlos aus dem Reaktionsgemisch abgetrennt werden kann. Die vorgenannten Dialkylphosphinsäuren lassen sich aus dem Reaktionsgemisch abtrennen und können andersweitig eingesetzt oder weiterverarbeitet werden.

Überraschenderweise entstehen nach dem erfindungsgemäßen Verfahren weder Phosphin (PH₃) noch Alkylphosphane (RPH₂, R₂PH) in nennenswerten Mengen. Durch Wahl geeigneter Reaktionsbedingungen - wie dem Hinzufügen geringer Anteile von Alkoholen zur organischen. Phase - wird die Bildung sämtlicher nicht identifizierter phosphorhaltiger Nebenprodukte zugunsten des Hauptprodukts, den (Metall)salzen der Alkylphosphonige Säure, auf ein überraschend geringes Maß von wenigen Mol% des eingesetzten gelben Phosphors minimiert.

Das erfindungsgemäße Verfahren kann beispielsweise so ausgeführt werden, daß man das Lösungsmittel zusammen mit dem Phasen-Transfer-Katalysator vorlegt und ggf. über den Schmelzpunkt des gelben Phosphors hinaus erwärmt, dann den elementaren (gelben) Phosphor zufügt, das Gemisch unter starkem Rühren auf Temperaturen von beispielsweise -10 bis +30 °C abkühlt und anschließend das Alkylierungsmittel zufügt.

Die Reaktion wird durch Zugabe der Base gestartet. Nach Beendigung der Reaktion kann das Reaktionssystem beispielsweise mit Wasser verdünnt werden und anschließend werden die leichtflüchtigen Anteile (H₂, PH₃, RPH₂, R₂PH und überschüssiges Alkylierungsmittel etc.) entfernt.

Man erhält hiernach ein basenhaltiges/organisches Zwei-Phasen-System, dessen Phasen getrennt werden. Die Inhaltsstoffe aus den Phasen werden analytisch bestimmt.

Die Reaktionspartner können auch in anderer Reihenfolge zusammengegeben werden, beispielsweise dadurch, daß man diese kontinuierlich in dem oben definierten Molverhältnis in einen Reaktor (Druckrohr, Druckreaktor oder Kaskade) einträgt und nach Verweilzeiten von 0,5 bis 2 h aus dem Reaktor wieder ausschleust. Die nach der Phasentrennung erhaltene organische Phase, die noch die Hauptmenge des ggf. eingesetzten Phasen-Transfer-Katalysators enthält, wird zweckmäßigerweise recyclisiert.

Die Isolierung der reinen Alkylphosphonigen Säuren aus dem Gemisch erfolgt in besonders einfacher Weise über die entsprechenden Ester, die im Gegensatz zu den Salzen und Säuren der Alkylphosphonigen Säuren in schonender Weise destillativ aus dem Gemisch isoliert werden können. Alle anderen im Gemisch enthaltenen Verbindungen werden in den Schritten b) und c) des erfindungsgemäßen Verfahrens zwar teilweise auch verestert, bilden aber keine leicht destillierbaren Produkte, so daß die Abtrennung der Alkylphosphonigsäureester in überraschend vollständiger und reiner Form gelingt.

Die Erfindung wird durch die nachstehenden Beispiele erläutert:

### Beispiel 1: Aluminiumsalz der Methylethylphosphinsäure

### a1) Umsetzung von gelbem Phosphor mit Methylchlorid

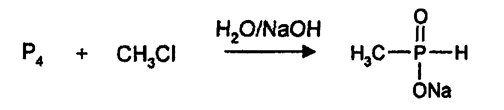

In einem 5 L Edelstahl-Druckreaktor wurde eine Lösung von 26,1 g (0.05 Mol) Tributylhexadecylphosphoniumbromid in 1000 mL Toluol vorgelegt und auf 60 °C vorgeheizt. Nach Zugabe von 62 g (2 Mol) gelbem Phosphor wurde unter intensivem Rühren auf-10 °C abgekühlt und dann 202 g (4 Mol) Methylchlorid einkondensiert. Danach wurde innerhalb 2 Stunden 400 g 50%ige wässrige Natronlauge zudosiert, wobei die Temperatur auf -10 °C gehalten wurde. Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.
Die wäßrige Phase (Auswaage: 920 g) enthielt 65,6 Mol% Methylphosphonige Säure, 14,9 Mol% Phosphorige Säure und 13,7 Mol% Hypophosphorige Säure und 2,8 Mol% Dimethylphosphinsäure in Form ihrer Natriumsalze sowie 3 Mol% Dimethyldiphosphin.

### a2) Überführung der Natriumsalze in die Säuren/NaCl-Abtrennung:

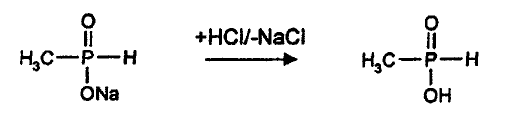

Die Lösung wurde sukzessive mit 60 g 5%iger wäßriger Wasserstoffperoxidlösung, mit 240 g 36%iger Salzsäure sowie mit 400 g 2-Ethylhexanol versetzt. Nach Abdestillation des enthaltenen Wassers am Wasserabscheider wurde das ausgefallene Natriumchlorid abfiltriert und mit 100 g 2-Ethylhexanol gewaschen. Die Ethylhexanol-Lösungen enthielten die unter a1) genannten Verbindungen jetzt als freie Säuren.

### b) Veresterung von Methanphosphonigsäure mit 2-Ethylhexanol im Reaktionsgemisch:

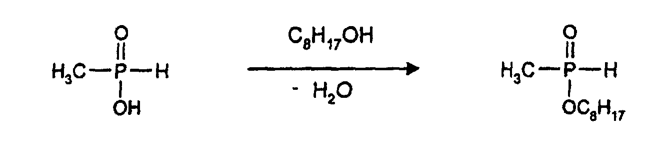

Die Ethylhexanol-Lösungen aus Schritt a2) wurden vereinigt und unter leicht reduziertem Druck ca. 6 h am Wasserabscheider auf ca. 120 °C erhitzt.

### c) Isolierung des Methanphosphonigsäure-2-ethylhexylesters:

Das veresterte Reaktionsgemisch aus b) wurde anschließend destillativ vom überschüssigen Ethylhexanol befreit und einer Vakuumdestillation unterzogen. Bei einem Druck von 0.3 mm und einer Kopf-Temperatur von 75 °C gingen 220 g Methanphosphonigsäure-2-ethylhexylester über. Das Produkt fällt in Form einer klaren, farblosen Flüssigkeit in einer Reinheit von über 99 % an, entsprechend einer Ausbeute von 58 %, bezogen auf den eingesetzten gelben Phosphor. Analysen: 16.0 % Phosphor (Theorie: 16.2 %); ³¹P-NMR: Dublett bei 34 ppm (Diastereomerenpaar)

### d) Umsetzung mit Ethylen zum Methylethylphosphinsäureester

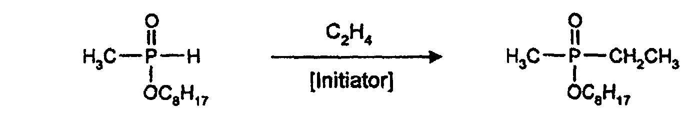

190 g Methanphosphonigsäure-2-ethylhexylester aus c) wurden in einem PTFE-beschichteten 750 mL-Stahl-Autoklav gefüllt. Anschließend wurde auf 150 °C erhitzt und Ethylen mit 5 bar aufgedrückt. Bei konstant gehaltenem Ethylen-Druck wurde während eines Zeitraumes von 4 h bei 150 °C eine Lösung von 3 g Di-tert.-Butylether in 30 g Methanphosphonigsäure-2-ethylhexylester aus c) zudosiert. Nach einer Nachreaktionszeit von 1 h wurde entspannt und der Reaktorinhalt ³¹P-NMR-spektroskopisch analysiert:
61 ppm: Methylethylphosphinsäureester 97.3 Mol-%
62 ppm: Methylbutylphosphinsäureester 2.0 Mol-%
34 ppm: Methylphosphonigsäureester: 0.7 Mol-%
Es wurden 258 g (Ausbeute > 99%) des Phosphinsäureesters in Form einer klaren, farblosen Flüssigkeit erhalten.

### e) Hydrolyse des Methylethylphosphinsäureesters zum Natriumsalz und Fällung als Al-Salz

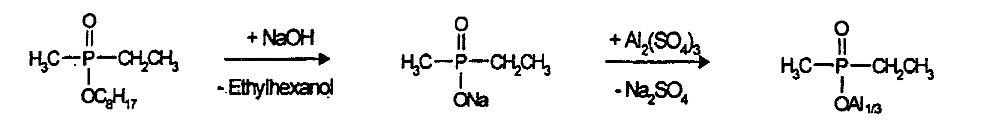

258 g Methylethylphosphinsäureethylhexylester (1.2 Mol) aus d) wurden zusammen mit einer Lösung von 47 g NaOH (1.2 Mol) in 200 g Wasser in einem PTFE-beschichteten 750 mL-Stahl-Autoklav 2 h auf 140 °C erhitzt. Nach Abdestillation des entstandenen Alkohols über einen Wasserabscheider wurden weitere 400 ml Wasser zugefügt und anschließend eine Lösung von 133 g (0.2 Mol) Al₂(SO₄)₃·18 H₂O in 150 ml Wasser über einen Zeitraum von 60 min zudosiert. Nach Filtration des entstandenen Niederschlags und Trocknung bei 30 mbar/130 °C erhielt man 135 g Aluminiumsalz der Methylethylphosphinsäure in Form eines feinen weißen Pulvers. Die Phosphoranalyse ergab 26.5 % P (ber.: 26.7 %), die Aluminiumanalyse 8,1 % Al (ber.: 8,0 %).
Die Ausbeute im Schritt·f) beträgt 97 %, die Gesamtausbeute (Schritte a) bis f), bezogen auf eingesetzten gelben Phosphor beträgt 56 %.

### Beispiel 2: Aluminiumsalz der Methylbutylphosphinsäure.

Analog zu Beispiel 1, Teilschritte a1) bis c) wurden 220 g Methanphosphonigsäure-2-ethylhexylester hergestellt und unter den Bedingungen, wie sie in Beispiel 1, Teilschritt d) beschrieben sind, mit n-Buten zu 290 g Methylbutylphoshinsäure-2-ethylhexylester umgesetzt. Anschließend wurde dieser zusammen mit 31 g Aluminiumhydroxid und 300 ml Essigsäure 10 h auf 220 °C erhitzt. Nach Abkühlung auf Raumtemperatur, Filtration und Trocknung bei 130 °C im Wasserstrahlvakuum erhielt man 155 g Methylbutylphosphinsäure-Aluminiumsalz, entsprechend 92 % d. Theorie, bezogen auf die letzte Umsetzung, bzw. 53 %, bezogen auf gelben Phosphor. Die Phosphoranalyse ergab 21.5 % P (ber.: 21.5 %), die Aluminiumanalyse 6.4 % Al (ber.: 6.2 %).

### Beispiel 3: Zinksalz der Methylethylphosphinsäure

### a1) - d): Methylethylphosphinigsäure-i-Butylester:

In einem 5 L Edelstahl-Druckreaktor wurde eine Lösung von 26,1 (0.05 Mol) Tributylhexadecylphosphoniumbromid in 1000 mL Toluol vorgelegt und auf 60 °C vorgeheizt. Nach Zugabe von 62 g (2 Mol) gelbem Phosphor wurde unter intensivem Rühren auf 5 °C abgekühlt und dann 202 g (4 Mol) Methylchlorid einkondensiert. Danach wurde auf ca. 20 °C erwärmt und bei dieser Temperatur innerhalb 2 Stunden 500 g 40%ige wässrige Natronlauge zudosiert. Innerhalb einer Stunde wurden 300 g Wasser zugegeben, danach zwei weitere Stunden nachgerührt und anschließend der Reaktor über eine Verbrennung entspannt. Man erhielt zwei homogene flüssige Phasen, die getrennt wurden. Die wäßrige Phase (Auswaage: 920 g mit 64,6 Mol% Methylphosphoniger Säure-Natriumsalz) wurde sukzessive mit 60 g 5%iger wäßriger Wasserstoffperoxidlösung, mit 240 g 36%iger Salzsäure sowie mit 300 g iso-Butanol versetzt. Nach Abdestillation des enthaltenen Wassers am Wasserabscheider wurde das ausgefallene Natriumchlorid abfiltriert und mit 100 g i-Butanol gewaschen. Die Butanol-Lösungen wurden vereinigt und ca. 12 h am Wasserabscheider auf 115-125 °C erhitzt. Das veresterte Reaktionsgemisch wurde anschließend destillativ vom überschüssigen Butanol befreit und einer Vakuumdestillation unterzogen. Bei einem Druck von 0.5 mm und einer Kopf-Temperatur von 42 °C gingen 158 g Methanphosphonigsäure-i-butylester in Form einer klaren, farblosen Flüssigkeit in einer Reinheit von über 99% über. Anschließend wurden 128 g des Esters in einem PTFE-beschichteten 750 mL-Stahl-Autoklav auf 150 °C erhitzt und Ethylen mit 5 bar aufgedrückt. Bei konstant gehaltenem Ethylen-Druck wurde während eines Zeitraumes von 4 h bei 150 °C eine Lösung von 3 g Di-tert.-Butylether in den restlichen 30 g Methanphosphonigsäure-i-butylester zudosiert. Nach einer Nachreaktionszeit von 1 h wurde entspannt und man erhielt 190 g (Ausbeute > 99%) des Phosphinsäureesters in Form einer klaren, farblosen Flüssigkeit.

### e) Zinksalz-Herstellung:

32 g (0.2 Mol) des erhaltenen Methylethylphosphinsäure i-butylesters wurde zusammen mit einer Lösung von 7.8 g NaOH (0.2 Mol) in 50 g Wasser in einem 300 mL-Stahl-Autoklav 2 h auf 140 °C erhitzt. Nach Abdestillation des entstandenen Alkohols über einen Wasserabscheider wurden weitere 80 ml Wasser zugefügt und anschließend eine Lösung von 25 g (0.1 Mol) ZnSO₄·7 H₂O in 40 ml Wasser über einen Zeitraum von 60 min zudosiert. Nach Filtration des entstandenen Niederschlags und Trocknung bei 30 mbar/130 °C erhielt man 23 g Zinksalz der Methylethylphosphinsäure in Form eines feinen weißen Pulvers. Die Phosphoranalyse ergab 25.0 % P (ber.: 25.4 %), die Zinkanalyse 12.5 % Zn (ber.: 12.3 %).

### Beispiel 4: Lithiumsalz der Methylethylphosphinsäure

32 g (0.2 Mol) des nach Beispiel 3, Teilschritte a1) - d), erhaltenen Methylethylphosphinsäure- i-butylesters wurde zusammen mit einer Lösung von 8.4 g LiOH·H₂O (0.2 Mol) in 50 g Wasser in einem 300 mL-Stahl-Autoklav 2 h auf 140 °C erhitzt. Nach Abdestillation des entstandenen iso-Butanols und des Wassers und anschließender Trocknung bei 30 mbar/130 °C erhielt man 23 g (> 99% Ausbeute) Lithiumsalz der Methylethylphosphinsäure in Form eines weißen Feststoffes. Die Phosphoranalyse ergab 27.0 % P (ber.: 27.2 %), die Lithiumanalyse 6.0 % Li (ber.: 6.1 %).

### Beispiel 5: Natriumsalz der Methylethylphosphinsäure

32 g (0.2 Mol) des nach Beispiel 3, Teilschritte al)-d), erhaltenen Methylethylphosphinsäure- i-butylesters wurde zusammen mit einer Lösung von 8.0 g NaOH·H₂O (0.2 Mol) in 20 g Wasser in einem 300 mL-Stahl-Autoklav 2 h auf 140 °C erhitzt. Nach Abdestillation des entstandenen iso-Butanols und des Wassers und anschließender Trocknung bei 30 mbar/130 °C erhielt man 26 g (> 99% Ausbeute) Natriumsalz der Methylethylphosphinsäure in Form eines weißen Feststoffes. Die Phosphoranalyse ergab 23.5 % P (ber.: 23.8 %), die Natriumanalyse 18.0 % Na (ber.: 17.7 %).

### Beispiel 6: Methylethylphosphinsäure

94 g (0.6 Mol) des nach Beispiel 3, Teilschritte a1) - d), erhaltenen Methylethylphosphinsäure-i-butylesters wurde mit 150 g Wasser in einem 300 mL-Stahl-Autoklav 8 h auf 140 °C erhitzt. Nach Abdestillation des entstandenen iso-Butanols und des Wassers und anschließender Vakuumdestillation erhielt man man 58 g Methylethylphosphinsäure in Form einer klaren farblosen Flüssigkeit (90% Ausbeute; Kp_{0.5}: 110 °C). Die Phosphoranalyse ergab 28.1 % P (ber.: 28.7%).

### Beispiel 7: Magnesiumsalz der Methylethylphosphinsäure

27 g (0.25 Mol) der nach Beispiel 6 erhaltenen Methylethylphosphinsäure wurden innerhalb von 30 min bei Raumtemperatur zu einer Suspension von 7.3 g (0.125 Mol) Magnesiumhydroxid in 100 g Wasser dosiert. Es entstand eine klare Lösung, die nach Abdestillation des Wassers und anschließender Trocknung bei 30 mbar/130 °C 29.5 g (> 99% Ausbeute) Magnesiumsalz der Methylethylphosphinsäure in Form eines weißen Feststoffes ergab. Die Phosphoranalyse ergab 25.9 % P (ber.: 26.0 %), die Magnesiumanalyse 10.0 % Mg (ber.: 10.2 %).

### Beispiel 8: Eisen(III)salz der Methylethylphosphinsäure

27 g (0.25 Mol) der nach Beispiel 6 erhaltenen Methylethylphosphinsäure wurden innerhalb von 30 min bei Raumtemperatur zu einer Lösung von 16.7 g (0.042 Mol) Fe₂(SO₄)₃ in 100 g Wasser dosiert. Nach Filtration des entstandenen Niederschlags und Trocknung bei 30 mbar/130 °C erhielt man 13.5 g Eisen(III)salz der Methylethylphosphinsäure in Form eines feinen weißen Pulvers (85 % Ausbeute). Die Phosphoranalyse ergab 25.0 % P (ber.: 24.7 %), die Eisenanalyse 14.5 % Fe (ber.: 14.8 %).

## Patentansprüche

1. Verfahren zur Herstellung von Dialkylphosphinsäuren und deren Salzen, **dadurch gekennzeichnet, daß** man
a) elementaren gelben Phosphor mit Alkylierungsmitteln in Gegenwart einer Base zu einem Gemisch, welches als Hauptbestandteile die (Metall)salze der Alkylphosphonigen, Phosphorigen und Hypophosphorigen Säure enthält, umsetzt
b) die Hauptbestandteile des Gemisches aus a) zu einer Estermischung verestert
c) den Ester der Alkylphosphonigen Säure aus der Estermischung isoliert
d) durch radikal-initiierte Umsetzung mit Olefinen aus dem Ester der Alkylphosphonigen Säure den entsprechenden Ester der Dialkylphosphinsäure herstellt
e) den Ester der Dialkylphosphinsäure in die freie Säure oder in Dialkylphosphinsäuresalze von Metallen der Gruppen IA, IIA, IIIA, IVA, VA, IIB, IVB, VIIB, VIIIB des Periodensystems oder von Cer überführt.

2. Verfahren nach Anspruch 1, **dadurch gekennzeichnet, daß** es sich bei den Alkylierungsmitteln um Alkylhalogenide, Dialkylsulfate, Trialkylphosphate, Dialkylcarbonate und/oder um Ameisensäureorthoester handelt.

3. Verfahren nach Anspruch 1 oder 2, **dadurch gekennzeichnet, daß** als Alkylierungsmittel Methylchlorid, Methylbromid und/oder Dimethylsulfat eingesetzt werden.

4. Verfahren nach einem oder mehreren der Ansprüche 1 bis 3, **dadurch gekennzeichnet, daß** es sich bei den Basen um Hydroxide, Carbonate, Bicarbonate, Amide, Alkoholate und/oder Aminbasen handelt.

5. Verfahren nach einem oder mehreren der Ansprüche 1 bis 3, **dadurch gekennzeichnet, daß** die Reaktion im Schritt a) in einem Zwei-Phasen-System aus wäßrigem Alkali- oder Erdalkalihydroxid oder Gemischen davon und einem organischen Lösungsmittel durchgeführt wird.

6. Verfahren nach einem oder mehreren der Ansprüche 1 bis 5, **dadurch gekennzeichnet, daß** als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, eingesetzt werden.

7. Verfahren nach einem oder mehreren der Ansprüche 1 bis 6, **dadurch gekennzeichnet, daß** als organisches Lösungsmittel Toluol, allein oder in Kombination mit Alkoholen, eingesetzt wird.

8. Verfahren nach einem oder mehreren der Ansprüche 1 bis 7, **dadurch gekennzeichnet, daß** die Reaktion in Anwesenheit eines Phasen-Transfer-Katalysators durchgeführt wird.

9. Verfahren nach Anspruch 8, **dadurch gekennzeichnet, daß** es sich bei dem Phasen-Transfer-Katalysator um Tetraalkylphosphoniumhalogenide, Triphenylalkylphosphoniumhalogenide oder Tetraorganylammoniumhalogenide handelt.

10. Verfahren nach einem oder mehreren der Ansprüche 1 bis 9, **dadurch gekennzeichnet, daß** die Temperatur bei der Umsetzung mit dem gelben Phosphor -20 bis + 80 °C beträgt.

11. Verfahren nach einem oder mehreren der Ansprüche 1 bis 10, **dadurch gekennzeichnet, daß** die Temperatur bei der Umsetzung mit dem gelben Phosphor 0 bis 30 °C beträgt.

12. Verfahren nach einem oder mehreren der Ansprüche 1 bis 11, **dadurch gekennzeichnet, daß** die Reaktion unter einem Druck von 0 bis 10 bar durchgefährt wird.

13. Verfahren nach einem oder mehreren der Ansprüche 1 bis 12, **dadurch gekennzeichnet, daß** man die Hauptbestandteile des Gemisches aus a) im Schritt b) mit einem linearen oder verzweigten Alkohol der algemeinen Formel R-OH , wobei R für einen linearen oder verzweigten Alkylrest mit 1 bis 10 Kohlenstoffatomen steht, verestert

14. Verfahren nach einem oder mehreren der Ansprüche 1 bis 12, **dadurch gekennzeichnet, daß** man die Hauptbestandteile des Gemisches aus a) mit Mineralsäuren eine Mischung der Alkylphosphonigen, Phosphorigen und Hypophosphorigen Säuren aberführt und gleichzeitig die (Metall)salze der Mineralsäuren ausfällt und anschließend die Mischung dieser Säuren verestert.

15. Verfahren nach einem oder mehreren der Ansprüche 1 bis 14, **dadurch gekennzeichnet, daß** man das bei der Veresterung gebildete Wasser durch Azeotropdestillation entfernt.

16. Verfahren nach einem oder mehreren der Ansprüche 1 bis 15, **dadurch gekennzeichnet, daß** es sich bei dem Alkohol um n-, i-Butanol, n-Hexanol, Ethylhexanol und/oder Amylalkohol handelt.

17. Verfahren nach einem oder mehreren der Ansprüche 1 bis 16, **dadurch gekennzeichnet, daß** es sich bei den Mineralsäuren um Salzsäure, Schwefelsäure und/oder Phosphorsäure handelt.

18. Verfahren nach einem oder mehreren der Ansprüche 1 bis 17, **dadurch gekennzeichnet, daß** es sich bei den Mineralsäuren um Salzsäure handelt.

19. Verfahren nach einem oder mehreren der Ansprüche 1 bis 17, **dadurch gekennzeichnet, daß** die im Schritt a) in geringen Mengen entstandenen Phosphine durch Oxidation entfernt werden.

20. Verfahren nach einem oder mehreren der Ansprüche 1 bis 19, **dadurch gekennzeichnet, daß** Wasserstoffperoxid für die Oxidation eingesetzt wird.

21. Verfahren nach einem oder mehreren der Ansprüche 1 bis 20, **dadurch gekennzeichnet, daß** im Schritt c) der Ester der Alkylphosphonigen Säure destillativ entfernt wird.

22. Verfahren nach einem oder mehreren der Ansprüche 1 bis 21, **dadurch gekennzeichnet, daß** es sich bei dem Ester der Alkylphosphonigen Säure um Methylphosphonigsäure-nbutylester, Methylphosphonigsäure-iso-butylester Methylphosphonigsäure-n-hexylester, Methylphosphonigsäure-2-ethylhexylester und/oder Methylphosphonigsäure-amylester handelt.

23. Verfahren nach einem oder mehreren der Ansprüche 1 bis 22, **dadurch gekennzeichnet, daß** im Schritt d) als Radikalstarter Azo-Verbindungen oder peroxidische anorganische und/oder peroxidische organische Radikalstarter eingesetzt werden.

24. Verfahren nach Anspruch 23, **dadurch gekennzeichnet, daß** es sich bei den Azo-Verbindungen um kationische und/oder nicht-kationische Azo-Verbindungen handelt

25. Verfahren nach Anspruch 23 oder 24, **dadurch gekennzeichnet, daß** als kationische Azo-Verbindungen 2,2'-Azobis(2-amidinopropan)dihydrochlorid oder 2,2'-Azobis(N,N'dimethylenisobutyramidin)dihydrochlorid eingesetzt werden.

26. Verfahren nach Anspruch 23 oder 24, **dadurch gekennzeichnet, daß** als nicht-kationische Azo-Verbindungen Azobis(isobutyronitril), 4,4'Azobis(4-cyano-pentansäure) und/oder 2,2'Azobis(2-methylbutyronitril) eingesetzt werden.

27. Verfahren nach Anspruch 23, **dadurch gekennzeichnet, daß** als peroxidische anorganische Radikalstarter Wasserstoffperoxid, Ammoniumperoxodisulfat und/oder Kaliumperoxodisulfat eingesetzt werden.

28. Verfahren nach Anspruch 23, **dadurch gekennzeichnet daß** als peroxidische organische Radikalstarter Dibenzoylperoxid, Di-tert.-butylperoxid und/oder Peressigsäure eingesetzt werden.

29. Verfahren nach einem oder mehreren der Ansprüche 1 bis 28, **dadurch gekennzeichnet, daß** die Radikalstarter während der Reaktion kontinuierlich zudosiert werden.

30. Verfahren nach einem oder mehreren der Ansprüche 1 bis 29, **dadurch gekennzeichnet, daß** die Radikalstarter während der Reaktion als Lösung im Olefin kontinuierlich zudosiert werden.

31. Verfahren nach einem oder mehreren der Ansprüche 1 bis 30, **dadurch gekennzeichnet, daß** als Olefine lineare oder verzweigte α-Olefine eingesetzt werden.

32. Verfahren nach einem oder mehreren der Ansprüche 1 bis 30, **dadurch gekennzeichnet, daß** als Olefine solche mit innenständiger Doppelbindung, cyclische oder offenkettige Diene und/oder Polyene mit 4 bis 10 Kohlenstoffatomen eingesetzt werden.

33. Verfahren nach einem oder mehreren der Ansprüche 1 bis 32, **dadurch gekennzeichnet, daß** als Olefine Ethylen, n-, i-Propylen, n-, i-Buten, n-, i-Penten, n-, i-Hexen, n-, i-Octen, 1-Decen, 1,3-Cyclooctadien, 1,3-Cyclopentadien, Dicyclopentadien und/oder 2,4,4-Trimethylpenten-Isomerenge-misch eingesetzt werden.

34. Verfahren nach einem oder mehreren der Ansprüche 1 bis 33, **dadurch gekennzeichnet, daß** die Olefine eine funktionelle Gruppe tragen.

35. Verfahren nach einem oder mehreren der Ansprüche 1 bis 34, **dadurch gekennzeichnet, daß** es sich bei den Metallen um Li, Na, K, Mg, Ca, Sr, Ba, Al, Ge, Sn, Sb, Bi, Zn, Ti, Zr, Mn, Fe und/oder Ce handelt.

36. Verfahren nach einem oder mehreren der Ansprüche 1 bis 35, **dadurch gekennzeichnet, daß** im Schritt e) der Ester der Dialkylphosphinsäure direkt mit Metallverbindungen zu den Metallsalzen der Dialkylphosphinsäure umgesetzt wird.

37. Verfahren nach einem oder mehreren der Ansprüche 1 bis 35, **dadurch gekennzeichnet, daß** im Schritt e) der Ester der Dialkylphosphinsäure zur Dialkylphosphinsäure hydrolysiert wird.

38. Verfahren nach einem oder mehreren der Ansprüche 1 bis 35, **dadurch gekennzeichnet, daß** im Schritt e) der Ester der Dialkylphosphinsäure zur Dialkylphosphinsäure hydrolysiert und dann zu den Metallsalzen der Dialkylphosphinsäure umgesetzt wird.

39. Verfahren nach einem oder mehreren der Ansprüche 1 bis 35, **dadurch gekennzeichnet, daß** im Schritt e) der Ester der Dialkylphosphinsäure mit Natronlauge zum Natriumsalz der Dialkylphosphinsäure hydrolysiert wird.

40. Verfahren nach einem oder mehreren der Ansprüche 1 bis 35, **dadurch gekennzeichnet, daß** im Schritt e) der Ester der Dialkylphosphinsäure mit Natronlauge zum Natriumsalz der Dialkylphosphinsäure hydrolysiert und dann zu den Metallsalzen der Dialkylphosphinsäure umgesetzt wird.

41. Verfahren nach einem oder mehreren der Ansprüche 1 bis 40, **dadurch gekennzeichnet, daß** es sich bei den Metallverbindungen um Metalloxide, -hydroxide, -oxidhydroxide, -sulfate, -acetate, -chloride, -nitrate und/oder -alkoxide handelt.

42. Verfahren nach einem oder mehreren der Ansprüche 1 bis 41, **dadurch gekennzeichnet, daß** es sich bei den Metallverbindungen um Aluminiumhydroxid oder Aluminiumsulfate handelt.

## Claims

1. A process for the preparation of dialkylphosphinic acids and salts thereof, which comprises
a) reacting elemental yellow phosphorus with alkylating agents in the presence of a base to give a mixture which comprises, as principal constituents, the (metal) salts of alkylphosphonous, phosphorous and hypophosphorous acids,
b) esterifying the principal constituents of the mixture from a) to give an ester mixture,
c) isolating the ester of the alkylphosphonous acid from the ester mixture,
d) preparing the corresponding ester of the dialkylphosphinic acid from the ester of the alkylphosphonous acid by free-radical-initiated reaction with olefins,
e) converting the ester of the dialkylphosphinic acid into the free acid or into the dialkylphosphinic acid salts of metals from groups IA, IIA, IIIA, IVA, VA, IIB, IVB, VIIB or VIIIB of the Periodic Table or of cerium.

2. The process as claimed in claim 1, wherein the alkylating agents are alkyl halides, dialkyl sulfates, trialkyl phosphates, dialkyl carbonates and/or formic acid ortho-esters.

3. The process as claimed in claim 1 or 2, wherein the alkylating agent employed is methyl chloride, methyl bromide and/or dimethyl sulfate.

4. The process as claimed in one or more of claims 1 to 3, wherein the bases are hydroxides, carbonates, bicarbonates, amides, alkoxides and/or amine bases.

5. The process as claimed in one or more of claims 1 to 3, wherein the reaction in step a) is carried out in a two-phase system comprising aqueous alkali or alkaline-earth metal hydroxide or mixtures thereof and an organic solvent.

6. The process as claimed in one or more of claims 1 to 5, wherein the organic solvents employed are straight-chain or branched alkanes, alkylsubstituted aromatic solvents, water-immiscible or only partially water-miscible alcohols or ethers, alone or in combination with one another.

7. The process as claimed in one or more of claims 1 to 6, wherein the organic solvent employed is toluene, alone or in combination with alcohols.

8. The process as claimed in one or more of claims 1 to 7, wherein the reaction is carried out in the presence of a phase-transfer catalyst.

9. The process as claimed in claim 8, wherein the phase-transfer catalyst is a tetraalkylphosphonium halide, triphenylalkylphosphonium halide or tetraorganylammonium halide.

10. The process as claimed in one or more of claims 1 to 9, wherein the temperature during the reaction with the yellow phosphorus is from -20 to +80°C.

11. The process as claimed in one or more of claims 1 to 10, wherein the temperature during the reaction with the yellow phosphorus is from 0 to 30°C.

12. The process as claimed in one or more of claims 1 to 11, wherein the reaction is carried out under a pressure of from 0 to 10 bar.

13. The process as claimed in one or more of claims 1 to 12, wherein the principal constituents of the mixture from a) are esterified in step b) using a linear or branched alcohol of the general formula R-OH, where R is a linear or branched alkyl radical having 1 to 10 carbon atoms.

14. The process as claimed in one or more of claims 1 to 12, wherein the principal constituents of the mixture from a) are converted into a mixture of alkylphosphonous, phosphorous and hypophosphorous acids using mineral acids, with the (metal) salts of the mineral acids simultaneously being precipitated, and the mixture of these acids subsequently being esterified.

15. The process as claimed in one or more of claims 1 to 14, wherein the water formed during the esterification is removed by azeotropic distillation.

16. The process as claimed in one or more of claims 1 to 15, wherein the alcohol is n- or i-butanol, n-hexanol, ethylhexanol and/or amyl alcohol.

17. The process as claimed in one or more of claims 1 to 16, wherein the mineral acid is hydrochloric acid, sulfuric acid and/or phosphoric acid.

18. The process as claimed in one or more of claims 1 to 17, wherein the mineral acid is hydrochloric acid.

19. The process as claimed in one or more of claims 1 to 17, wherein the phosphines formed in small amounts in step a) are removed by oxidation.

20. The process as claimed in one or more of claims 1 to 19, wherein hydrogen peroxide is employed for the oxidation.

21. The process as claimed in one or more of claims 1 to 20, wherein the ester of the alkylphosphonous acid is removed by distillation in step c).

22. The process as claimed in one or more of claims 1 to 21, wherein the ester of the alkylphosphonous acid is n-butyl methylphosphonite, isobutyl methylphosphonite, n-hexyl methylphosphonite, 2-ethylhexyl methylphosphonite and/or amyl methylphosphonite.

23. The process as claimed in one or more of claims 1 to 22, wherein the free-radical initiators employed in step d) are azo compounds or peroxidic inorganic and/or peroxidic organic free-radical initiators.

24. The process as claimed in claim 23, wherein the azo compounds are cationic and/or non-cationic azo compounds.

25. The process as claimed in claim 23 or 24, wherein the cationic azo compounds employed are 2,2'-azobis(2-amidinopropane) dihydrochloride or 2,2'-azobis(N,N'-dimethyleneisobutyramidine) dihydrochloride.

26. The process as claimed in claim 23 or 24, wherein the non-cationic azo compounds employed are azobis(isobutyronitrile), 4,4'-azobis(4-cyanopentanoic acid) and/or 2,2'-azobis(2-methylbutyronitrile).

27. The process as claimed in claim 23, wherein the peroxidic inorganic free-radical initiators employed are hydrogen peroxide, ammonium peroxodisulfate and/or potassium peroxodisulfate.

28. The process as claimed in claim 23, wherein the peroxidic organic free-radical initiators employed are dibenzoyl peroxide, di-tert-butyl peroxide and/or peracetic acid.

29. The process as claimed in one or more of claims 1 to 28, wherein the free-radical initiators are metered in continuously during the reaction.

30. The process as claimed in one or more of claims 1 to 29, wherein the free-radical initiators are metered in continuously during the reaction as a solution in the olefin.

31. The process as claimed in one or more of claims 1 to 30, wherein the olefins employed are linear or branched α-olefins.

32. The process as claimed in one or more of claims 1 to 30, wherein the olefins employed are those having an internal double bond, cyclic or open-chain dienes and/or polyenes having 4 to 10 carbon atoms.

33. The process as claimed in one or more of claims 1 to 32, wherein the olefins employed are ethylene, n- or i-propylene, n- or i-butene, n- or i-pentene, n- or i-hexene, n- or i-octene, 1-decene, 1,3-cyclooctadiene, 1,3-cyclopentadiene, dicyclopentadiene and/or 2,4,4-trimethylpentene isomer mixtures.

34. The process as claimed in one or more of claims 1 to 33, wherein the olefins carry a functional group.

35. The process as claimed in one or more of claims 1 to 34, wherein the metals are Li, Na, K, Mg, Ca, Sr, Ba, Al, Ge, Sn, Sb, Bi, Zn, Ti, Zr, Mn, Fe and/or Ce.

36. The process as claimed in one or more of claims 1 to 35, wherein, in step e), the esters of_the dialkylphosphinic acid are reacted directly with metal compounds to give the metal salts of the dialkylphosphinic acid.

37. The process as claimed in one or more of claims 1 to 35, wherein, in step e), the ester of the dialkylphosphinic acid is hydrolyzed to the dialkylphosphinic acid.

38. The process as claimed in one or more of claims 1 to 35, wherein, in step e), the ester of the dialkylphosphinic acid is hydrolyzed to the dialkylphosphinic acid and then converted to the metal salts of the dialkylphosphinic acid.

39. The process as claimed in one or more of claims 1 to 35, wherein, in step e), the ester of the dialkylphosphinic acid is hydrolyzed to the sodium salt of the dialkylphosphinic acid using sodium hydroxide solution.

40. The process as claimed in one or more of claims 1 to 35, wherein, in step e), the ester of the dialkylphosphinic acid is hydrolyzed to the sodium salt of the dialkylphosphinic acid with sodium hydroxide solution and then converted to the metal salts of the dialkylphosphinic acid.

41. The process as claimed in one or more of claims 1 to 40, wherein the metal compounds are metal oxides, hydroxides, oxide hydroxides, sulfates, acetates, chlorides, nitrates and/or alkoxides.

42. The process as claimed in one or more of claims 1 to 41, wherein the metal compounds are aluminum hydroxide or aluminum sulfates.

## Revendications

1. Procédé de préparation d'acides dialkylphosphiniques et de leurs sels, **caractérisé en ce que**
a) on fait réagir du phosphore jaune élémentaire avec des agents d'alkylation en présence d'une base pour obtenir un mélange contenant comme constituants principaux les sels (métalliques) de l'acide alkylphosphoneux, de l'acide phosphoreux et de l'acide hypophosphoreux,
b) on estérifie les constituants principaux du mélange de a) pour obtenir un mélange d'esters,
c) on isole l'ester d'acide alkylphosphoneux du mélange d'esters,
d) à partir de l'ester de l'acide alkylphosphoneux, on prépare l'ester correspondant de l'acide dialkylphosphinique par réaction avec des oléfines amorcée par des radicaux,
e) on transforme l'ester de l'acide dialkylphosphinique en l'acide libre ou en des sels de l'acide dialkylphosphinique avec des métaux des groupes IA, IIA, IIIA, IVA, IIB, IVB, VIIB, VIIIB du système périodique ou du cérium.

2. Procédé selon la revendication 1, **caractérisé en ce que** les agents d'alkylation sont des halogénures d'alkyle, des sulfates de dialkyle, des phosphates de trialkyle, des carbonates de dialkyle et/ou des orthoesters de l'acide formique.

3. Procédé selon la revendication 1 ou 2, **caractérisé en ce que** l'on utilise du chlorure de méthyle, du bromure de méthyle et/ou du sulfate de diméthyle comme agent d'alkylation.

4. Procédé selon l'une ou plusieurs des revendications 1 à 3, **caractérisé en ce que** les bases sont des hydroxydes, des carbonates, des bicarbonates, des amides, des alkylates et/ou des bases de type amine.

5. Procédé selon l'une ou plusieurs des revendications I à 3, **caractérisé en ce que** la réaction de l'étape a) s'effectue dans un système à deux phases constitué d'un hydroxyde de métal alcalin ou de métal alcalino-terreux aqueux ou de l'un de leurs mélanges et d'un solvant organique.

6. Procédé selon l'une ou plusieurs des revendications 1 à 5, **caractérisé en ce que** l'on utilise comme solvants organiques des alcanes linéaires ou ramifiés, des solvants aromatiques alkylés, des alcools ou des éthers non miscibles ou seulement partiellement miscibles à l'eau, seuls ou en combinaison entre eux.

7. Procédé selon l'une ou plusieurs des revendications 1 à 6, **caractérisé en ce que** l'on utilise comme solvant organique du toluène, seul ou en combinaison avec des alcools.

8. Procédé selon l'une ou plusieurs des revendications 1 à 7, **caractérisé en ce que** la réaction s'effectue en présence d'un catalyseur de transfert de phase.

9. Procédé selon la revendication 8, **caractérisé en ce que** le catalyseur de transfert de phase est un halogénure de tétraalkylphosphonium, un halogénure de triphénylalkylphosphonium ou un halogénure de tétraorganylammonium.

10. Procédé selon l'une ou plusieurs des revendications 1 à 8, **caractérisé en ce que** la température de la réaction avec le phosphore jaune est comprise entre -20 et +80°C.

11. Procédé selon l'une ou plusieurs des revendications 1 à 10, **caractérisé en ce que** la température de la réaction avec le phosphore jaune est comprise entre 0 et 30°C.

12. Procédé selon l'une ou plusieurs des revendications 1 à 11, **caractérisé en ce que** la réaction s'effectue sous une pression de 0 à 10 bar.

13. Procédé selon l'une ou plusieurs des revendications 1 à 12, **caractérisé en ce que** l'on estérifie dans l'étape b) les constituants principaux du mélange de a) avec un alcool linéaire ou ramifié de formule générale R-OH, dans laquelle R représente un reste alkyle linéaire ou ramifié de 1 à 10 atomes de carbone.

14. Procédé selon l'une ou plusieurs des revendications 1 à 12, **caractérisé en ce que** l'on obtient à partir des constituants principaux du mélange de a), avec des acides inorganiques, un mélange des acides alkylphosphoneux, phosphoreux et hypophosphoreux et on précipite en même temps les sels (métalliques) des acides inorganiques, puis on estérifie le mélange de ces acides.

15. Procédé selon l'une ou plusieurs des revendications 1 à 14, **caractérisé en ce que** l'on élimine par distillation azéotropique l'eau formée lors de l'estérification.

16. Procédé selon l'une ou plusieurs des revendications 1 à 15, **caractérisé en ce que** l'alcool est le n-butanol, l'isobutanol, le n-hexanol, l'éthylhexanol et/ou l'alcool amylique.

17. Procédé selon l'une ou plusieurs des revendications 1 à 16, **caractérisé en ce que** les acides inorganiques sont l'acide chlorhydrique, l'acide sulfurique et/ou l'acide phosphorique.

18. Procédé selon l'une ou plusieurs des revendications 1 à 17, **caractérisé en ce que** l'acide inorganique est l'acide chlorhydrique.

19. Procédé selon l'une ou plusieurs des revendications 1 à 17, **caractérisé en ce que**, dans l'étape a), on élimine par oxydation les phosphines formées en petite quantité.

20. Procédé selon l'une ou plusieurs des revendications 1 à 19, **caractérisé en ce que** l'on utilise du peroxyde d'hydrogène pour l'oxydation.

21. Procédé selon l'une ou plusieurs des revendications 1 à 20, **caractérisé en ce que**, dans l'étape c), on sépare l'ester d'acide alkylphosphoneux par distillation.

22. Procédé selon l'une ou plusieurs des revendications 1 à 21, **caractérisé en ce que** l'ester de l'acide alkylphosphoneux est le méthylphosphonite de n-butyle, le méthylphosphonite d'isobutyle, le méthylphosphonite de n-hexyle, le méthylphosphonite de 2-éthylhexyle et/ou le méthylphosphonite d'amyle.

23. Procédé selon l'une ou plusieurs des revendications 1 à 22, **caractérisé en ce que**, dans l'étape d), on utilise comme amorceurs radicalaires des composés azoïques ou des amorceurs radicalaires de type peroxyde inorganique et/ou de type peroxyde organique.

24. Procédé selon la revendication 23, **caractérisé en ce que** les composés azoïques sont des composés azoïques cationiques et/ou non cationiques.

25. Procédé selon la revendication 23 ou 24, **caractérisé en ce que** l'on utilise comme composés azoïques cationiques le dichlorhydrate de 2,2'-azobis(2-amidinopropane) ou le dichlorhydrate de 2,2'-azobis(N,N'-diméthylène-isobutyramidine).

26. Procédé selon la revendication 23 ou 24, **caractérisé en ce que** l'on utilise comme composés azoïques non cationiques l'azobis(isobutyronitrile), l'acide 4,4'-azobis(4-cyanopentanoïque) et/ou le 2,2'-azobis(2-méthylbutyronitrile).

27. Procédé selon la revendication 23, **caractérisé en ce que** l'on utilise comme amorceur radicalaire de type peroxyde inorganique du peroxyde d'hydrogène, du peroxodisulfate d'ammonium et/ou du peroxodisulfate de potassium.

28. Procédé selon la revendication 23, **caractérisé en ce que** l'on utilise comme amorceur radicalaire de type peroxyde organique du peroxyde de dibenzoyle, du peroxyde de di-tert-butyle et/ou de l'acide peracétique.

29. Procédé selon l'une ou plusieurs des revendications 1 à 28, **caractérisé en ce que** l'on ajoute les amorceurs radicalaires de façon dosée en continu pendant la réaction.

30. Procédé selon l'une ou plusieurs des revendications 1 à 29, **caractérisé en ce que** l'on ajoute les amorceurs radicalaires de façon dosée en continu pendant la réaction, sous forme d'une solution dans l'oléfine.

31. Procédé selon l'une ou plusieurs des revendications 1 à 30, **caractérisé en ce que** l'on utilise comme oléfines des α-oléfines linéaires ou ramifiées.

32. Procédé selon l'une ou plusieurs des revendications 1 à 30, **caractérisé en ce que** l'on utilise comme oléfines des oléfines à double liaison interne, des diènes cycliques ou à chaîne ouverte et/ou des polyènes de 4 à 10 atomes de carbone.

33. Procédé selon l'une ou plusieurs des revendications 1 à 32, **caractérisé en ce que** l'on utilise comme oléfines de l'éthylène, du n-propylène, de l'isopropylène, du n-butène, de l'isobutène, de l'isopentène, du n-hexène, de l'isohexène, du n-octène, de l'isooctène, du 1-décène, du 1,3-cyclooctadiène, du 1,3-cyclopentadiène, du dicyclopentadiène et/ou un mélange d'isomères de 2,4,4-triméthylpentène.

34. Procédé selon l'une ou plusieurs des revendications 1 à 33, **caractérisé en ce que** les oléfines portent un groupe fonctionnel.

35. Procédé selon l'une ou plusieurs des revendications 1 à 34, **caractérisé en ce que** les métaux sont Li, Na, K, Mg, Ca, Sr, Ba, Al, Ge, Sn, Sb, Bi, Zn, Ti, Zr, Mn, Fe et/ou Ce.

36. Procédé selon l'une ou plusieurs des revendications 1 à 35, **caractérisé en ce que**, dans l'étape e), on transforme directement l'ester de l'acide dialkylphosphinique en le sel métallique de l'acide dialkylphosphinique avec un composé métallique.

37. Procédé selon l'une ou plusieurs des revendications 1 à 35, **caractérisé en ce que**, dans l'étape e), on hydrolyse l'ester de l'acide dialkylphosphinique pour obtenir l'acide dialkylphosphinique.

38. Procédé selon l'une ou plusieurs des revendications 1 à 35, **caractérisé en ce que**, dans l'étape e), on hydrolyse l'ester de l'acide dialkylphosphinique pour obtenir l'acide dialkylphosphinique, puis on le transforme en sel métallique de l'acide dialkylphosphinique.

39. Procédé selon l'une ou plusieurs des revendications 1 à 35, **caractérisé en ce que**, dans l'étape e), on hydrolyse l'ester de l'acide dialkylphosphinique avec une solution de soude pour obtenir le sel de sodium de l'acide dialkylphosphinique.

40. Procédé selon l'une ou plusieurs des revendications 1 à 35, **caractérisé en ce que**, dans l'étape e), on hydrolyse l'ester de l'acide dialkylphosphinique avec une solution de soude pour obtenir le sel de sodium de l'acide dialkylphosphinique, puis on le transforme en sel métallique de l'acide dialkylphosphinique.

41. Procédé selon l'une ou plusieurs des revendications 1 à 40, **caractérisé en ce que** les composés métalliques sont des oxydes, des hydroxydes, des oxydes-hydroxydes, des sulfates, des acétates, des chlorures, des nitrates et/ou des alkylates de métaux.

42. Procédé selon l'une ou plusieurs des revendications 1 à 41, **caractérisé en ce que** les composés métalliques sont l'hydroxyde d'aluminium ou des sulfates d'aluminium.
